(19) **Europäisches Patentamt / European Patent Office / Office européen des brevets**

(11) **EP 4 579 087 A1**

(12) **EUROPÄISCHE PATENTANMELDUNG**

(43) Veröffentlichungstag:
**02.07.2025   Patentblatt 2025/27**

(21) Anmeldenummer: **24221035.9**

(22) Anmeldetag: **18.12.2024**

(51) Internationale Patentklassifikation (IPC):
**F04D 15/00** (2006.01)    **F04D 13/06** (2006.01)
**F04D 29/043** (2006.01)    **F04D 29/60** (2006.01)
**F04D 29/62** (2006.01)

(52) Gemeinsame Patentklassifikation (CPC):
**F04D 15/0088; F04D 13/06; F04D 29/043;**
**F04D 29/605; F04D 29/628;** A62C 35/68;
A62C 37/50; F05D 2270/821

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: **29.12.2023   DE 102023136854**

(71) Anmelder: **MECON GmbH**
**51491 Overath (DE)**

(72) Erfinder:
• **Böke, Joachim**
  **40625 Düsseldorf (DE)**
• **Friede, Frank**
  **23909 Ratzeburg (DE)**
• **Jauer, Philipp**
  **23558 Lübeck (DE)**

(74) Vertreter: **Stork Bamberger Patentanwälte**
**PartmbB**
**Meiendorfer Strasse 89**
**22145 Hamburg (DE)**

(54) **ÜBERWACHUNGSVORRICHTUNG, ANORDNUNG UND VERFAHREN FÜR EINE SPRINKLERPUMPENEINHEIT**

(57)      Die Erfindung betrifft eine Überwachungsvorrichtung (1) für eine Sprinklerpumpeneinheit (2) umfassend mindestens eine erste Messeinheit (3) und eine Auswerteeinheit (5) und wobei die Sprinklerpumpeneinheit (2) einen Antrieb (7), eine Pumpe (8) und eine Montagebasis (9) umfasst, wobei der Antrieb (7) mit einer ersten Befestigung (10) und die Pumpe (8) mit einer zweiten Befestigung (11) an der Montagebasis (9) befestigt sind und die Montagebasis (9) mit einer dritten Befestigung (12) am Boden befestigt ist und zeichnet sich dadurch aus, dass die Überwachungsvorrichtung (1) eingerichtet und ausgebildet ist, eine Positionsveränderung mindestens eines Referenzpunktes (PP, PA) an der Pumpe (8) und/oder dem Antrieb (7) relativ zu mindestens einem ortsfesten Referenzpunkt mittels der mindestens einen ersten Messeinheit (3) zu bestimmen. Des Weiteren betrifft die Erfindung ein entsprechendes Verfahren sowie eine Anordnung mit einer Sprinklerpumpeneinheit (2).

Fig. 1

EP 4 579 087 A1

**Beschreibung**

Die vorliegende Erfindung betrifft eine Überwachungsvorrichtung für eine Sprinklerpumpeneinheit, umfassend mindestens eine erste Messeinheit und eine Auswerteeinheit und wobei die Sprinklerpumpeneinheit einen Antrieb, eine Pumpe und eine Montagebasis umfasst, wobei der Antrieb mit einer ersten Befestigung und die Pumpe mit einer zweiten Befestigung an der Montagebasis befestigt sind und die Montagebasis mit einer dritten Befestigung am Boden befestigt ist.

Weiter betrifft die Erfindung eine Anordnung mit einer Sprinklerpumpeneinheit, wobei die Sprinklerpumpeneinheit einen Antrieb, eine Pumpe und eine Montagebasis umfasst, wobei der Antrieb mit einer ersten Befestigung und die Pumpe mit einer zweiten Befestigung an der Montagebasis befestigt sind und die Montagebasis mit einer dritten Befestigung am Boden befestigt ist.

Des Weiteren betrifft die Erfindung ein Verfahren zur Überwachung einer Sprinklerpumpeneinheit mit einer Überwachungsvorrichtung, wobei die Überwachungsvorrichtung mindestens eine erste Messeinheit und eine Auswerteeinheit umfasst, wobei die Sprinklerpumpeneinheit einen Antrieb, eine Pumpe und eine Montagebasis umfasst, wobei der Antrieb mit einer ersten Befestigung und die Pumpe mit einer zweiten Befestigung an der Montagebasis befestigt sind und die Montagebasis mit einer dritten Befestigung am Boden befestigt ist.

Derartige Überwachungsvorrichtungen, Anordnungen und Verfahren kommen insbesondere bei Feuerlöschanlagen zum Einsatz. Die in solchen Feuerlöschanlagen verbauten Sprinklerpumpeneinheiten dienen im Brandfall zur Versorgung der Löschanlage mit Löschfluid. Um einen ordnungsgemäßen Betrieb der Sprinklerpumpeneinheit zu gewährleisten, ist es erforderlich, dass insbesondere stets eine korrekte Ausrichtung von Pumpe und Antrieb gewährleistet ist.

Daher finden sich in den Richtlinien NPFA 20 und FM Data Sheet 3-07 wohl definierte Vorgaben für den Zusammenbau der Pumpenaggregaten. Hierbei wird insbesondere auf die Ausrichtung der Kopplung von Pumpe und Antrieb besonderes Augenmerk gelegt. Eine solche Ausrichtung kann beim Zusammenbau beispielsweise unter Zuhilfenahme von Schablonen erfolgen. Auch ein messtechnisches Ausrichten mittels Lasern findet hierbei Anwendung.

Das Datenblatt FM 2-81 zur Inspektion, Prüfung und Wartung von Brandschutzanlagen sieht für den Test von Pumpen eine Sichtkontrolle der Pumpeneinheit vor, um dessen Testbetrieb vor, um gelöste, verrostete, korrodierte oder beschädigte Pumpen-/Antriebs-Sicherungsbolzen zu erkennen.

Aus dem Dokument WO 03 / 089875 A1 geht ein Verfahren und eine Vorrichtung hervor, welche zur Messung der relativen Lage eines ersten Bauteils und eines zweiten Bauteils mittels einer ersten Messeinheit und einer zweiten Messeinheit eingerichtet ist. Die Vorrichtung umfasst eine erste und zweite Halterung zur Befestigung der ersten bzw. der zweiten Messeinheit an einem Gehäuse, das Teil des ersten Bauteils bzw. des zweiten Bauteils ist. Jede Messeinheit ist fest an einem drehbaren Element montiert. Die Messeinheiten sind geeignet, in einem ersten und in einem zweiten Betriebszustand des ersten Bauteils und des zweiten Bauteils, die relative Achsposition des ersten Bauteils in Bezug auf das zweite Bauteil zu messen.

Nachteilig an dem aus dem Stand der Technik bekannten Verfahren und Vorrichtung ist, dass mit diesen ausschließlich die relative Ausrichtung der Achspositionen zwischen zwei Bauteilen überwacht werden kann. Mit anderen Worten ist damit nur möglich, die Winkellage zwischen zwei Achsen zu überwachen. Jedwede andere Veränderung der relativen Position zwischen den beiden Bauteilen, beispielsweise bei einer reinen translatorischen Positionsveränderung, kann mit dem bekannten Verfahren und Vorrichtung überhaupt nicht erfasst werden. Zudem findet stets nur eine Überwachung zwischen zwei Bauteilen statt, sodass Ausrichtung- und Positionsveränderung mehrerer Komponenten ebenfalls nicht erfasst werden. Ein weiterer Nachteil besteht darin, dass zur Erfassung der Ausrichtung der Achspositionen ein laserbasiertes Messsystem zum Einsatz kommt. Derartige optische Messsysteme gehen mit einem entsprechend apparativen Aufwand einher.

Es ist daher Aufgabe der vorliegenden Erfindung, eine Überwachungsvorrichtung vorzuschlagen, die mit möglichst geringem apparativem Aufwand zuverlässig möglichst jede Positionsveränderung einer oder mehrere Komponenten einer Sprinklerpumpeneinheit gewährleistet. Des Weiteren besteht die Aufgabe darin, ein entsprechendes Verfahren vorzuschlagen. Ferner ist es Aufgabe der vorliegenden Erfindung eine entsprechende Anordnung bereitzustellen, die die sichere Durchführung eines Pumpentestlaufes erlaubt.

Die Aufgabe wird durch die Überwachungsvorrichtung mit den eingangs genannten Merkmalen dadurch gelöst, dass die Überwachungsvorrichtung eingerichtet und ausgebildet ist, eine Positionsveränderung mindestens eines Referenzpunktes an der Pumpe und/oder dem Antrieb relativ zu mindestens einem ortsfesten Referenzpunkt, also einem Bezugspunkt außerhalb der Sprinklerpumpeneinheit, mittels der mindestens einen ersten Messeinheit zu bestimmen. So ist es möglich, mit verhältnismäßig geringem apparativem Aufwand die Positionsveränderungen innerhalb der Sprinklerpumpeneinheit stets zuverlässig zu erkennen und zu überwachen. Die Bestimmung einer Positionsveränderung relativ zu dem mindestens einen ortsfesten Referenzpunkt bietet den Vorteil, dass dabei jede mögliche unerwünschte Positionsveränderung gegenüber diesem Referenzpunkt erfasst wird. Mit anderen Worten ist die vorliegende Erfindung darauf gerichtet, sämtliche Befestigungs- bzw. Montageebenen zu überwachen. Bei diesen Befestigungsebenen handelt es sich insbesondere um die Ebenen Montagebasis - Antrieb, Montagebasis - Pumpe, Montagebasis - Boden. Trotz der Überwachung mehrerer Befestigungsebenen erfordert die erfindungsgemäße Überwachungsvorrichtung nur einen geringen messtechnischen Aufwand und ist daher zudem kostengünstig realisierbar.

Eine zweckmäßige Ausgestaltung der Erfindung ist dadurch gekennzeichnet, dass die Überwachungsvorrichtung zum Bestimmen der Positionsveränderung eingerichtet und ausgebildet ist, einen ersten Abstandsänderungswert $\Delta d1$ des mindestens einen Referenzpunktes an der Pumpe und/oder einen zweiten Abstandsänderungswert $\Delta d2$ des mindestens einen Referenzpunktes an dem Antrieb zu dem mindestens einen ortsfesten Referenzpunkt zu bestimmen, wobei die Auswerteeinheit ferner eingerichtet und ausgebildet ist, den ersten Abstandsänderungswert $\Delta d1$ und/oder den zweiten Abstandsänderungswert $\Delta d2$ mit einem vorgegebenen Referenzabstandsänderungswert $\Delta ref$ zu vergleichen und bei Erfüllung der Ungleichungen $|\Delta d1| > \Delta ref$ und/oder $|\Delta d2| > \Delta ref$ den ersten Abstandsänderungswert $\Delta d1$ als einen ersten Abweichungswert $\Delta a1$ und/oder den zweiten Abstandsänderungswert $\Delta d2$ als einen zweiten Abweichungswert $\Delta a2$ zu generieren und/oder ein Abweichungssignal zu generieren. Auf diese Weise können Positionsveränderungen zuverlässig erfasst und überwacht werden. Anhand der jeweilige Abstandsänderungswerte $\Delta d1$, $\Delta d2$ ist es möglich, die Größenordnung einer erfolgten Positionsveränderung quantitativ zu erfassen. Unter quantitativer Erfassung im Sinne der vorliegenden Erfindung ist zu verstehen, dass der Größenordnung einer erfolgten Positionsveränderung zumindest ein entsprechender Zahlenwert zugeordnet ist. Mit anderen Worten können als Abstandsänderungswerte $\Delta d1$, $\Delta d2$ stellvertretende Messgrößen erfasst werden, anhand der zumindest qualitativ eine Positionsveränderung feststellbar ist. Der Zahlenwert muss daher nicht notwendigerweise mit der tatsächlich erfassten Positionsveränderung korrelieren, sondern kann durch eine vorgegebene Zuordnungsvorschrift festgelegt sein. Vorteilhafterweise korreliert der Zahlenwert mit der erfassten Positionsveränderung, beispielweise durch eine proportionale Zuordnung zwischen der Größe der Positionsveränderung und Zahlenwert. Vorzugsweise ist die Überwachungsvorrichtung eingerichtet, die "Nulllage", also den Zustand, in dem alle Komponenten der Sprinklerpumpeneinheit korrekt ausgerichtet sind und sich in den gewünschten Positionen befinden, zu erfassen. Die der jeweilige Abstandsänderungswerte $\Delta d1$, $\Delta d2$ weisen in diesem Zustand jeweils den Wert Null auf. Eine mögliche Positionsveränderung wird mittels der Überwachungsvorrichtung durch die jeweilige Abstandsänderungswerte $\Delta d1$, $\Delta d2$ quantifiziert.

Vorteilhafterweise ist die Auswerteeinheit ferner eingerichtet, die jeweiligen Abstandsänderungswerte $\Delta d1$, $\Delta d2$ mit einem vorgegebenen Referenzwert $\Delta ref$ zu vergleichen. Dieser Referenzwert $\Delta ref$ dient damit als Schwellwert, sodass kleine Beträge der Abstandsänderungswerte $\Delta d1$, $\Delta d2$, die unterhalb diesem liegen, nicht als Positionsabweichung gewertet werden. Erst, wenn die Beträge der Abstandsänderungswerte $\Delta d1$, $\Delta d2$ jeweils den Referenzwert $\Delta ref$ überschreiten, wertet die Auswerteeinheit diese als relevante Positionsveränderung und generiert in Folge die genannten Abstandsänderungswerte und/oder das Abweichungssignal.

Eine weitere zweckmäßige Ausbildung der Erfindung ist dadurch gekennzeichnet, dass die Überwachungsvorrichtung eingerichtet ist, den ersten Abstandsänderungswert $\Delta d1$ des Referenzpunktes an der Pumpe zu einem ortsfesten ersten Referenzpunkt und/oder den zweiten Abstandsänderungswert $\Delta d2$ des Referenzpunktes an dem Antrieb zu einem ortsfesten zweiten Referenzpunkt zu bestimmen. Dies bietet den Vorteil, dass Positionsveränderungen der Pumpe und/oder des Antriebs mittels der erfindungsgemäßen Überwachungsvorrichtung gegenüber dem ortsfesten Referenzpunkt erfasst und deren Größe(n) quantifiziert werden können. Der erste und zweite ortsfeste Referenzpunkt bezeichnet dabei jeweils einen Punkt, der außerhalb der Sprinklerpumpeneinheit liegt. Der erste und zweite Referenzpunkt befinden sich dabei beispielsweise an unterschiedlichen Orten, können aber alternativ auch ortsgleich sein.

Eine weitere zweckmäßige Ausgestaltung der Erfindung ist dadurch gekennzeichnet, dass die mindestens eine erste Messeinheit eingerichtet und ausgebildet ist, einen ersten Abstandwert d1 zu bestimmen und eine zweite Messeinheit eingerichtet und ausgebildet ist, einen zweiten Abstandwert d2 zu bestimmen, und ferner die Auswerteeinheit eingerichtet und ausgebildet ist, den ersten Abstandsänderungswert $\Delta d1$ aus der Differenz des Abstandwertes d1 und einem vorgegebenen ersten Referenzabstandswert $d_{01}$ zu bilden sowie den zweiten Abstandsänderungswert $\Delta d2$ aus der Differenz des Abstandwertes d2 und einem vorgegebenen zweiten Referenzabstandswert $d_{02}$, wobei die Auswerteeinheit ferner eingerichtet und ausgebildet, ist den ersten Abstandwert d1 mit dem ersten Referenzabstandwert $d_{01}$ sowie den zweiten Abstandwert d2 mit dem zweiten Referenzabstandwert $d_{02}$ zu vergleichen und bei Erfüllung der Ungleichungen $(d_{01} + Aref) < d1 < (d_{01} - Aref)$ und $(d_{02} + Aref) < d2 < (d_{02} - Aref)$ den ersten Abstandwert d1 als einen ersten Abstandsabweichungswert da1 und/oder den zweiten Abstandswert d2 als einen zweiten Abstandsabweichungswert da2 zu generieren und/oder ein Abweichungssignal zu generieren, wobei $\Delta ref$ ein vorgegebener Referenzabstandsänderungswert ist. Die im Zusammenhang mit der Bestimmung der Abstandsänderungswerte $\Delta d1$, $\Delta d2$ genannten Vorteile gelten in analoger Weise auch für die Bestimmung des ersten und zweiten Abstandswerts d1, d2, nur mit dem Unterschied, dass die Abstandswerte absolute Abstände bezeichnen.

Eine bevorzugte Weiterbildung der Erfindung zeichnet sich dadurch aus, dass der Referenzpunkt an der Pumpe und der Referenzpunkt an dem Antrieb über ein flexibles zugkraftaufnahmestabiles Lastaufnahmeelement miteinander mechanisch verbunden sind, wobei ein freies Ende des Lastaufnahmeelements an der ersten Messeinheit zum Erfassen der Positionsveränderung mindestens eines der Referenzpunkte angeordnet ist. Vorteilhafterweise ist es so möglich, mit der ersten Messeinheit, also mit einer einzigen, mögliche Positionsveränderungen sowohl des Referenzpunktes an der Pumpe als auch des Referenzpunktes an dem Antrieb zu überwachen. Hierdurch wird der messtechnische Aufwand auf ein Minimum reduziert und eine äußerst kostengünstige Lösung durch die vorliegende Erfindung bereitgestellt. Durch das flexible zugkraftaufnahmestabile Lastelement wird auf mechanischem Wege eine Summation beider möglicher Positionsänderungen durch Superposition bewirkt. Je nachdem, wie das Lastaufnahmeelement auf den Abschnitten zwischen dem Referenzpunkt an der Pumpe und dem Referenzpunkt an dem Antrieb sowie zwischen dem Referenzpunk an der Pumpe oder dem Referenzpunkt an dem Antrieb und der ersten Messeinheit ausgerichtet sind, gehen die jeweiligen Positionsänderungen entsprechend gewichtet in die Summation ein. Unter dem zugkraftaufnahmestabilen Lastelement wird ein solches Element verstanden, das in der Lage ist, zumindest bei Beaufschlagung mit einer Zugkraft formstabil zu bleiben.

Gemäß einer weiteren bevorzugten Ausbildung der Erfindung ist die Überwachungsvorrichtung zum Bestimmen der Positionsveränderung eingerichtet und ausgebildet, einen Summen-Abstandsänderungswert $\Delta dS$, gebildet als Summenwert aus einer Abstandsänderung b1, zwischen dem mindestens einen Referenzpunkt an der Pumpe oder dem mindestens einen Referenzpunktes an dem Antrieb und dem mindestens einen ortsfesten Referenzpunkt, und einer Abstandsänderung b2 zwischen Pumpe und Antrieb, zu bestimmen, wobei die Auswerteeinheit ferner eingerichtet und ausgebildet ist, den Summen- Abstandsänderungswert $\Delta dS$ mit einem vorgegebenen Referenzabstandsänderungswert $\Delta ref$ zu vergleichen und bei Erfüllung der Ungleichung $|\Delta dS| > \Delta ref$ ein Abweichungssignal zu erzeugen und/oder den Summen-Abstandsänderungswert $\Delta dS$ als einen dritten Abweichungswert $\Delta a3$ zu generieren. Vorteilhafterweise wird so der Summenwert, vorzugsweise insbesondere rechnerisch, ermittelt und bei Erfüllung der genannten Ungleichung der dritte Abweichungswert $\Delta a3$ als quantitative Summengröße ermittelt, der die Gesamtabweichung widerspiegelt.

Eine bevorzugte Weiterbildung der Erfindung zeichnet sich dadurch aus, dass die mindestens eine Messeinheit eingerichtet und ausgebildet ist, einen Summen-Abstandwert dS zu bestimmen, und ferner die Auswerteeinheit eingerichtet und ausgebildet ist, den Summen-Abstandsänderungswert $\Delta dS$ aus der Differenz des Summen-Abstandwerts dS und einem vorgegebenen dritten Referenzabstandswert $d_{03}$ zu bilden, wobei vorzugsweise die Auswerteeinheit ferner eingerichtet und ausgebildet, ist den Summen-Abstandwert dS mit dem dritten Referenzabstandswert $d_{03}$ zu vergleichen und bei Erfüllung der Ungleichung $(d_{03} - Aref) > dS > (dos + Aref)$ ein Abweichungssignal zu erzeugen und/oder den Summen-Abstandwert dS als einen dritten Abstandsabweichungswert da3 zu generieren. Die mit der Ermittlung des Summen-Abstandwerts dS einhergehenden Vorteile entsprechen in analoger Weise den zuvor beschriebenen Vorteilen der Ermittlung des Abstandsänderungswert $\Delta dS$, nur mit dem Unterschied, dass der Summen-Abstandwert dS keine Abstandsänderung quantifiziert, sondern den absoluten Abstand wiedergibt. Unter Quantifizierung im Sinne der vorliegenden Erfindung ist zu verstehen, dass dem erfassten Abstand zumindest ein entsprechender Zahlenwert zugeordnet ist. Der Zahlenwert muss daher nicht notwendigerweise mit dem tatsächlich erfassten Abstand korrelieren, sondern kann durch eine vorgegebene Zuordnungsvorschrift festgelegt sein. Vorteilhafterweise korreliert der Zahlenwert mit dem erfassten Abstand.

Eine weitere zweckmäßige Ausbildung der Erfindung ist dadurch gekennzeichnet, dass das Lastaufnahmeelement an dem Referenzpunkt an der Pumpe oder an dem Referenzpunkt an dem Antrieb fixiert angeordnet ist, während das Lastaufnahmeelement an dem jeweils anderen Referenzpunkt, nämlich an dem Referenzpunkt an dem Antrieb oder an der Pumpe, relativ zu diesem zumindest in einem Freiheitsgrad beweglich angeordnet ist. Vorteilhafterweise können so Positionsveränderungen von Pumpe und Antrieb auf besonders einfache Art und Weise erfasst werden. Durch die zumindest in einem Freiheitsgrad bewegliche Anordnung führen Positionsveränderungen an dem anderen Referenzpunkt jedenfalls dazu, dass diese über das Lastaufnahmeelement auf die erste Messeinrichtung einwirken. Ebenso führen Positionsveränderungen des Referenzpunktes, an dem das Lastaufnahmeelement fixiert ist, ebenfalls dazu, dass diese auf die erste Messeinrichtung einwirken. Auf diese Weise wird eine sowohl eine mechanische Entkopplung der Referenzpunkte an Pumpe und Antrieb erzielt, zugleich sind aber Positionsveränderungen mittels der ersten Messeinrichtung von beiden Referenzpunkten erfassbar.

Eine bevorzugte Weiterbildung der Erfindung zeichnet sich dadurch aus, dass das Lastaufnahmeelement derart angeordnet ist, dass dieses zwischen den Referenzpunkten an der Pumpe und dem Antrieb in einer ersten Richtung und zwischen einem der Referenzpunkte und der ersten Messeinheit in einer zweiten Richtung ausgerichtet ist, wobei die Richtungsvektoren der ersten und zweiten Richtungen linear unabhängig voneinander sind. Dies bietet den Vorteil, dass die Positionsveränderungen jedes der Referenzpunkte in Abhängigkeit der jeweiligen Ausrichtung der Richtungsvektoren mit unterschiedlichen Gewichtungsfaktoren eingehen.

Gemäß einer weiteren bevorzugten Ausführungsform ist das Lastaufnahmeelement an dem jeweils anderen Referenzpunkt mittels eines Federelements angeordnet. Auf diese Weise können sich die Referenzpunkte einerseits unabhängig voneinander bei einer Positionsveränderung bewegen und zugleich kann die Positionsveränderung durch eine Änderung der auf das Lastaufnahmeelement wirkenden Zugkraft mittels der ersten Messeinheit erfasst werden. Zudem bietet das Federelement den Vorteil, dass das Lastaufnahmeelement mittels Federkraft vorgespannt wird. Auf diese Weise können Positionsveränderungen, die sowohl den Abstand zwischen dem jeweiligen Referenzpunkt und der ersten Messeinheit vergrößern, als auch verkleinern erfasst werden.

Eine weitere zweckmäßige Ausgestaltung der Erfindung ist dadurch gekennzeichnet, dass an dem jeweils anderen Referenzpunkt eine Öse oder eine Rolle angeordnet ist, durch die oder über die das Lastaufnahmeelement geführt angeordnet ist. Vorteilhafterweise ist so, dass Lastelement an dem anderen Referenzpunkt zumindest in dem genannten einen Freiheitsgrad bewegbar angeordnet. Die mit den um den einen Freiheitsgrad bewegbaren Anordnung genannten Vorteile gelten in analoger Weise.

Eine bevorzugte Weiterbildung der Erfindung zeichnet sich dadurch aus, dass das Lastaufnahmeelement ketten- oder seilförmig ausgebildet ist. Eine solche Ausführung des Lastaufnahmeelements stellt eine möglichst einfache Ausbildung dar, die zugleich die Anforderungen an die geforderte die Zugstabilität erfüllt.

Gemäß einer weiteren bevorzugten Ausbildung der Erfindung ist das Lastaufnahmeelement zugelastisch ausgebildet. Hiermit ist der Vorteil verbunden, dass das Lastaufnahmeelement zugleich die Funktion eines Federelements erfüllt.

Eine weitere zweckmäßige Ausbildung der Erfindung ist dadurch gekennzeichnet, dass die erste Messeinheit und/oder die zweite Messeinheit mindestens einen Abstandssensor aus der folgenden Liste umfassen: Wägezellensensor, resistiver Sensor, optischer Sensor, laseroptische Systeme, induktiver Sensor, Sicherheitsschalter. Insbesondere der Einsatz von Wägezellensensoren hat sich als besonders vorteilhaft herausgestellt, da diese Kraft- und/oder Wegänderungen in ein entsprechendes elektrisches Signal umsetzen, um daraus die genannten positionsveränderungsrelevanten Größen zu ermitteln.

Des Weiteren wird die Aufgabe durch eine entsprechende Anordnung gelöst, die eine Überwachungseinrichtung mit den zuvor genannten Merkmalen und eine Steuereinrichtung umfasst, wobei die Steuereinrichtung ferner eingerichtet und ausgebildet ist, zu einem vorgegebenen Teststartzeitpunkt automatisch ein Startsignal zum Start eines Pumpentestlaufes zu erzeugen, um die Pumpe zu starten und die Steuereinrichtung eingerichtet und ausgebildet ist, bei Vorhandensein eines ersten Abweichungswerts und/oder eines zweiten Abweichungswerts das Startsignal zum Start des Pumpentestlaufes zu blockieren. Auf diese Weise wird sichergestellt, dass ein Pumpentestlauf nur dann gestartet wird, wenn alle Komponenten der Sprinklerpumpeneinheit sich in ihren vorgegebenen Sollpositionen befinden, also mittels der erfindungsgemäßen Überwachungsvorrichtung keine signifikante Positionsveränderung festgestellt worden ist.

Eine weitere zweckmäßige Ausbildung der Erfindung ist dadurch gekennzeichnet, dass die Steuereinrichtung eingerichtet und ausgebildet ist, bei Vorhandensein eines ersten Abstandsabweichungswerts und/oder eines zweiten Abstandsabweichungswert das Startsignal zum Start des Pumpentestlaufes zu blockieren. Auf diese Weise wird ein Anlaufen der Pumpe zuverlässig vermieden, sofern eine Positionsveränderung festgestellt worden ist.

Eine bevorzugte Weiterbildung der Erfindung zeichnet sich dadurch aus, dass die Steuereinheit ausgebildet ist, das Startsignal zum Start des Pumpentestlaufes so lange zu blockieren, bis die Steuereinheit mittels eines Resetsignals zurückgesetzt wird. Auf diese Weise wird die Funktion des Pumpentestlaufes temporär zumindest solange verhindert, bis die Steuereinheit mittels des Resetsignals zurückgesetzt wird.

Ferner wird die Aufgabe durch das eingangs genannte Verfahren gelöst durch Bestimmen einer Positionsveränderung mindestens eines Referenzpunktes an der Pumpe und/oder dem Antrieb relativ zu mindestens einem ortsfesten Referenzpunkt mittels der mindestens einen Messeinheit.

Die mit der vorliegenden Erfindung erzielbaren Vorteile wurden bereits im Zusammenhang mit der erfindungsgemäßen Vorrichtung sowie der erfindungsgemäßen Anordnung zuvor im Detail beschrieben. Zur Vermeidung von Wiederholungen verweisen wir auch im Zusammenhang mit dem erfindungsgemäßen Verfahren auf die dort genannten Vorteile, die auf die im Wesentlichen analog zu der Vorrichtung und der Anordnung abgefassten Verfahrensansprüche in gleicher Weise gelten. Im Folgenden wird daher zum erfindungsgemäßen Verfahren nur zu ausgewählten Aspekten gesondert Stellung genommen.

Eine bevorzugte Weiterbildung der Erfindung zeichnet sich durch Bestimmen der Positionsveränderung durch Bestimmen eines ersten Abstandsänderungswerts $\Delta d1$ des mindestens einen Referenzpunktes an der Pumpe und/oder eines zweiten Abstandsänderungswerts $\Delta d2$ des mindestens einen Referenzpunktes an dem Antrieb zu dem mindestens einen ortsfesten Referenzpunkt und Vergleichen des ersten Abstandsänderungswertes $\Delta d1$ und/oder des zweiten Abstandsänderungswertes $\Delta d2$ mit einem vorgegebenen Referenzabstandsänderungswert $\Delta ref$ und bei Erfüllung der Ungleichungen $|\Delta d1| > \Delta ref$ und/oder $|\Delta d2| > \Delta ref$ den ersten Abstandsänderungswert $\Delta d1$ als einen ersten Abweichungswert $\Delta a1$ und/oder den zweiten Abstandsänderungswert $\Delta d2$ als einen zweiten Abweichungswert $\Delta a2$ zu generieren und/oder ein Abweichungssignal zu generieren, aus.

Eine weitere zweckmäßige Ausbildung der Erfindung ist gekennzeichnet durch Bestimmen des ersten Abstandsänderungswertes $\Delta d1$ des Referenzpunktes an

der Pumpe zu einem ortsfesten ersten Referenzpunkt und/oder des zweiten Abstandsänderungswertes $\Delta d2$ des Referenzpunktes an dem Antrieb zu einem ortsfesten zweiten Referenzpunkt.

Eine weitere zweckmäßige Ausgestaltung der Erfindung ist gekennzeichnet durch Bestimmen eines ersten Abstandwertes d1 mittels der mindestens einen ersten Messeinheit und eines zweiten Abstandwert d2 mittels mindestens einer zweiten Messeinheit, und ferner durch Bilden des ersten Abstandsänderungswerts $\Delta d1$ aus der Differenz des Abstandwertes d1 und einem vorgegebenen ersten Referenzabstandswert $d_{01}$ sowie des zweiten Abstandsänderungswerts $\Delta d2$ aus der Differenz des Abstandwertes d2 und einem vorgegebenen zweiten Referenzabstandswert $d_{02}$ und Vergleichen des ersten Abstandswerts d1 mit dem ersten Referenzabstandwert $d_{01}$ sowie des zweiten Abstandswerts d2 mit dem zweiten Referenzabstandwert $d_{02}$ und bei Erfüllung der Ungleichungen $(do, + Aref) < d1 < (do, - Aref)$ und $(d_{02} + Aref) < d2 < (d_{02} - Aref)$ den ersten Abstandwert d1 als einen ersten Abstandsabweichungswert da1 und/oder den zweiten Abstandswert d2 als einen zweiten Abstandsabweichungswert da2 zu generieren und/oder ein Abweichungssignal zu generieren, wobei $\Delta ref$ ein vorgegebener Referenzabstandsänderungswert ist.

Gemäß einer weiteren bevorzugten Ausbildung der Erfindung erfolgt das Erfassen der Positionsveränderung mindestens eines der Referenzpunkte, indem ein freies Ende des Lastaufnahmeelements an der ersten Messeinheit angeordnet ist und der Referenzpunkt an der Pumpe und der Referenzpunkt an dem Antrieb über ein flexibles zugkraftaufnahmestabiles Lastaufnahmeelement miteinander mechanisch verbunden sind.

Eine weitere zweckmäßige Ausgestaltung der Erfindung ist gekennzeichnet durch Bestimmen der Positionsveränderung durch Bilden eines Summen-Abstandsänderungswert $\Delta dS$ aus einer Abstandsänderung b1 zwischen dem mindestens einen Referenzpunkt an der Pumpe oder dem mindestens einen Referenzpunktes an dem Antrieb und dem mindestens einen ortsfesten Referenzpunkt und einer Abstandsänderung b2 zwischen Pumpe und Antrieb und Vergleichen des Summen- Abstandsänderungswerts $\Delta dS$ mit einem vorgegebenen Referenzabstandsänderungswert $\Delta ref$ und bei Erfüllung der Ungleichung $|\Delta dS| > \Delta ref$ Erzeugen eines Abweichungssignales und/oder Generieren des Summen-Abstandsänderungswertes $\Delta dS$ als einen dritten Abweichungswert $\Delta a3$.

Gemäß einer weiteren bevorzugten Ausführungsform werden ein Summen-Abstandwert dS und ein Summen-Abstandsänderungswert $\Delta dS$ aus der Differenz des Summen-Abstandwerts dS und einem vorgegebenen dritten Referenzabstandswert gebildet, der Summen-Abstandwert dS mit dem dritten Referenzabstandswert verglichen und bei Erfüllung der Ungleichung $(d_{03} - Aref) > dS > (d_{03} + Aref)$ ein Abweichungssignal erzeugt und/oder das Summen-Abstandwert dS als einen dritten Abstandsabweichungswert da3 generiert.

Gemäß einer weiteren bevorzugten Ausbildung der Erfindung ist das Lastaufnahmeelement an dem Referenzpunkt an der Pumpe oder an dem Referenzpunkt an dem Antrieb fixiert angeordnet, während das Lastaufnahmeelement an dem jeweils anderen Referenzpunkt, nämlich an dem Referenzpunkt an dem Antrieb oder an der Pumpe, relativ zu diesem zumindest in einem Freiheitsgrad beweglich angeordnet ist.

Gemäß einer weiteren bevorzugten Ausführungsform ist das Lastaufnahmeelement derart angeordnet, dass dieses zwischen den Referenzpunkten an der Pumpe und dem Antrieb in einer ersten Richtung und zwischen einem der Referenzpunkte und der ersten Messeinheit in einer zweiten Richtung ausgerichtet ist, wobei die Richtungsvektoren der ersten und zweiten Richtungen linear unabhängig voneinander sind.

Eine bevorzugte Weiterbildung der Erfindung zeichnet sich durch Betreiben einer Sprinklerpumpeneinheit aus, wobei die Sprinklerpumpeneinheit einen Antrieb, eine Pumpe und eine Montagebasis umfasst, wobei der Antrieb mit einer ersten Befestigung und die Pumpe mit einer zweiten Befestigung an der Montagebasis befestigt sind und die Montagebasis mit einer dritten Befestigung am Boden befestigt ist, und mit einer Überwachungseinrichtung mit den zuvor beschriebenen Merkmalen und ferner mit einer Steuereinrichtung, wobei die Steuereinrichtung zu einem vorgegebenen Teststartzeitpunkt automatisch ein Startsignal zum Start eines Pumpentestlaufes erzeugt, um die Pumpe zu starten, und bei Vorhandensein eines ersten Abweichungswerts und/oder eines zweiten Abweichungswerts das Startsignal zum Start des Pumpentestlaufes mittels der Steuereinrichtung blockiert.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:

Fig. 1      eine schematische Darstellung einer ersten Ausführungsvariante der vorliegenden Erfindung,

Fig. 2      eine schematische Darstellung einer zweiten Ausführungsvariante der vorliegenden Erfindung,

Fig. 3      eine schematische Darstellung einer dritten Ausführungsvariante der vorliegenden Erfindung,

Fig. 4      eine schematische Darstellung einer vierten Ausführungsvariante der vorliegenden Erfindung,

Fig. 5      eine schematische Darstellung einer Abwandlung der in Fig. 4 gezeigten Ausführungsvariante und

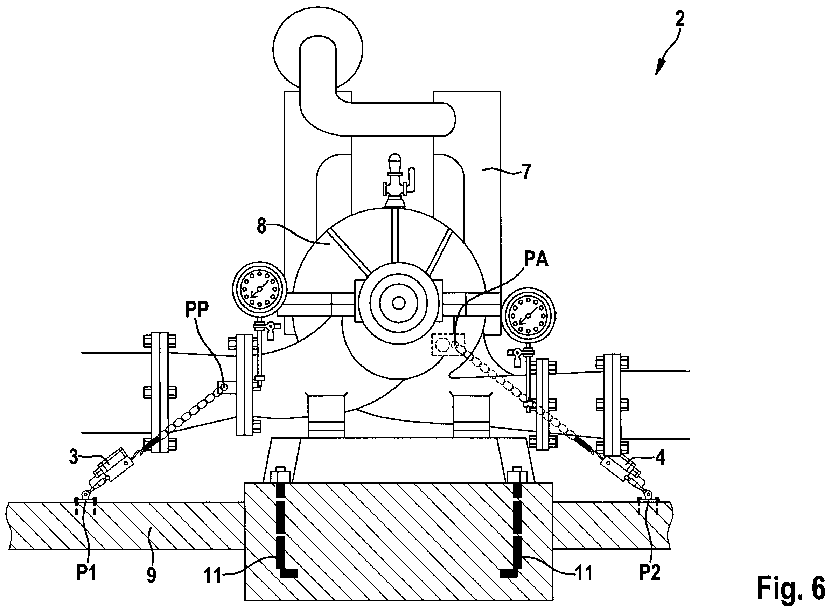

Fig. 6    eine Frontansicht von Sprinklerpumpeneinheit und erfindungsgemäßer Überwachungsvorrichtung.

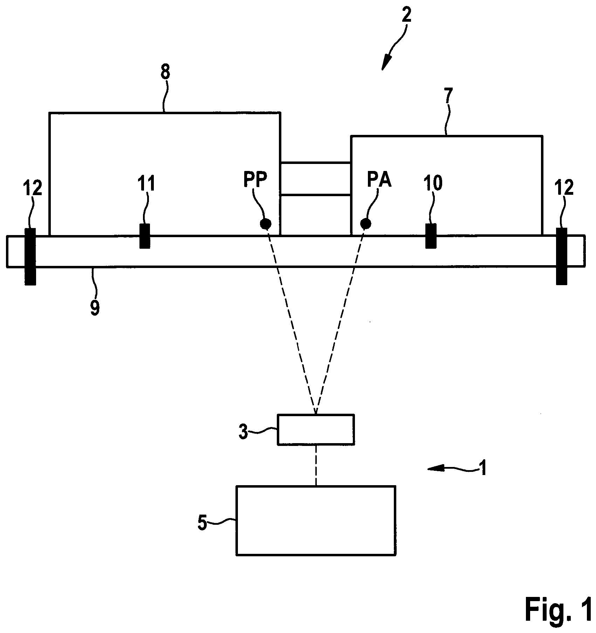

Figur 1 zeigt beispielshaft eine schematische Ansicht der erfindungsgemäßen Überwachungsvorrichtung 1 nebst Sprinklerpumpeneinheit 2. Wie in Figur 1 gezeigt umfasst diese mindestens eine erste Messeinheit 3 und eine Auswerteeinheit 5. Die Sprinklerpumpeneinheit 2 umfasst einen Antrieb 7, beispielsweise einen Elektromotor oder einen Dieselmotor, eine Pumpe 8 und eine Montagebasis 9. Der Antrieb 7 ist mit einer ersten Befestigung 10 an der Montagebasis 9 befestigt angeordnet. Die Pumpe 8 ist mit einer zweiten Befestigung 11 an der Montagebasis 9 befestigt angeordnet. Die Montagebasis selbst ist mit einer dritten Befestigung 12 am Boden befestigt ist. Die Befestigung erfolgt beispielsweise jeweils mit - in der Figur nicht gezeigten - Bolzen. Auch ist es möglich, dass der Antrieb 7 und/oder die Pumpe 8 unmittelbar am Boden befestigt sind/ist.

Vorzugsweise ist die Überwachungsvorrichtung 1 eingerichtet und ausgebildet, eine Positionsveränderung mindestens eines Referenzpunktes PP, PA an der Pumpe 8 und/oder dem Antrieb 7 relativ zu mindestens einem ortsfesten Referenzpunkt P1, P2, also einem Bezugspunkt außerhalb der Sprinklerpumpeneinheit 2, mittels der mindestens einen ersten Messeinheit 3 zu bestimmen.

Weiter bevorzugt ist die Überwachungsvorrichtung 1 zum Bestimmen der Positionsveränderung eingerichtet und ausgebildet, indem diese einen ersten Abstandsänderungswert $\Delta d1$ des mindestens einen Referenzpunktes PP an der Pumpe 8 und/oder einen zweiten Abstandsänderungswert $\Delta d2$ des mindestens einen Referenzpunktes PA an dem Antrieb 7 zu dem mindestens einen ortsfesten Referenzpunkt P1, P2 bestimmt.

Vorteilhafterweise ist die Auswerteeinheit 5 ferner eingerichtet und ausgebildet, den ersten Abstandsänderungswert $\Delta d1$ und/oder den zweiten Abstandsänderungswert $\Delta d2$ mit einem vorgegebenen Referenzabstandsänderungswert $\Delta ref$ zu vergleichen. Dieser Vergleich prüft, ob die Ungleichungen $|\Delta d1| > \Delta ref$ und/oder $|\Delta d2| > \Delta ref$ erfüllt sind, um sodann den ersten Abstandsänderungswert $\Delta d1$ als einen ersten Abweichungswert $\Delta a1$ und/oder den zweiten Abstandsänderungswert $\Delta d2$ als einen zweiten Abweichungswert $\Delta a2$ zu generieren und/oder ein Abweichungssignal zu generieren. Vorteilhafterweise ist die Auswerteeinheit 5 ferner eingerichtet, die jeweiligen Abstandsänderungswerte $\Delta d1$, $\Delta d2$ mit einem vorgegebenen Referenzwert $\Delta ref$ zu vergleichen. Dieser Referenzwert $\Delta ref$ dient damit als Schwellwert, sodass kleine Beträge der Abstandsänderungswerte $\Delta d1$, $\Delta d2$, die unterhalb diesem liegen, nicht also Positionsabweichung gewertet werden. Erst, wenn die Beträge der Abstandsänderungswerte $\Delta d1$, $\Delta d2$ jeweils den Referenzwert $\Delta ref$ überschreiten, wertet die Auswerte-

einheit 5 diese als relevante Positionsveränderung und generiert in Folge die genannten Abstandsänderungswerte und/oder das Abweichungssignal.

Eine weitere zweckmäßige Ausbildung der Erfindung ist dadurch gekennzeichnet, dass die Überwachungsvorrichtung 1 eingerichtet ist, den ersten Abstandsänderungswert $\Delta d1$ des Referenzpunktes PP an der Pumpe 8 zu einem ortsfesten ersten Referenzpunkt P1 und/oder den zweiten Abstandsänderungswert $\Delta d2$ des Referenzpunktes PA an dem Antrieb 7 zu einem ortsfesten zweiten Referenzpunkt P2 zu bestimmen. Der erste und zweite ortsfeste Referenzpunkt P1, P2 bezeichnet dabei jeweils einen Punkt, der außerhalb der Sprinklerpumpeneinheit 2 liegt. Der erste und zweite Referenzpunkt befindet sich dabei beispielsweise jeweils an unterschiedlichen Orten oder an ein- und demselben Ort.

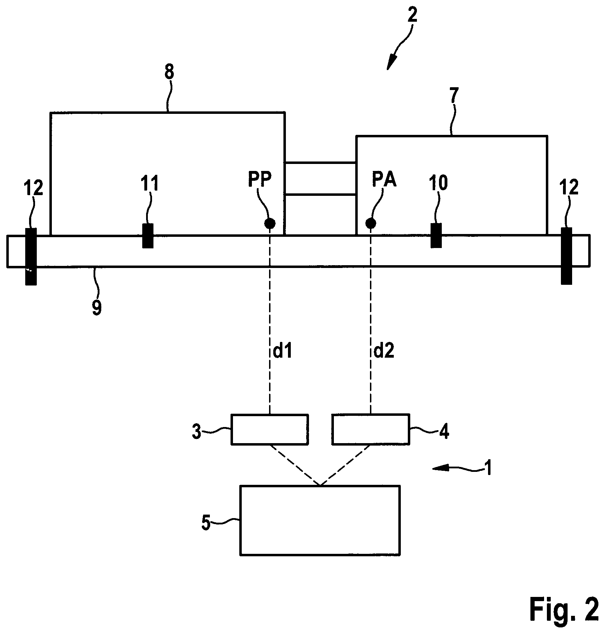

Weiter bevorzugt ist - wie anhand der in Figur 2 gezeigten Ausführungsvariante ersichtlich - die mindestens eine erste Messeinheit 3 eingerichtet, einen ersten Abstandwert d1 zu bestimmen und eine zweite Messeinheit 4 ausgebildet, einen zweiten Abstandwert d2 zu bestimmen. Ferner ist die Auswerteeinheit 5 eingerichtet und ausgebildet, den ersten Abstandsänderungswert $\Delta d1$ aus der Differenz des Abstandwertes d1 und einem vorgegebenen ersten Referenzabstandswert $d_{01}$ zu bilden sowie den zweiten Abstandsänderungswert $\Delta d2$ aus der Differenz des Abstandwertes d2 und einem vorgegebenen zweiten Referenzabstandswert $d_{02}$. Dabei ist die Auswerteeinheit 5 ferner eingerichtet und ausgebildet, den ersten Abstandswert d1 mit dem ersten Referenzabstandwert $d_{01}$ sowie den zweiten Abstandswert d2 mit dem zweiten Referenzabstandwert $d_{02}$ zu vergleichen. Bei Erfüllung der Ungleichungen

$$(d_{01} + \Delta ref) < d1 < (d_{01} - \Delta ref)$$

und

$$(d_{02} + \Delta ref) < d2 < (d_{02} - \Delta ref)$$

wird der ersten Abstandwert d1 als ein erster Abstandsabweichungswert da1 und/oder der zweiten Abstandswert d2 als ein zweiter Abstandsabweichungswert da2 mittels der Auswerteeinheit 5 generiert und/oder ein Abweichungssignal generiert. Die Größe $\Delta ref$ bezeichnet dabei einen vorgegebenen Referenzabstandsänderungswert.

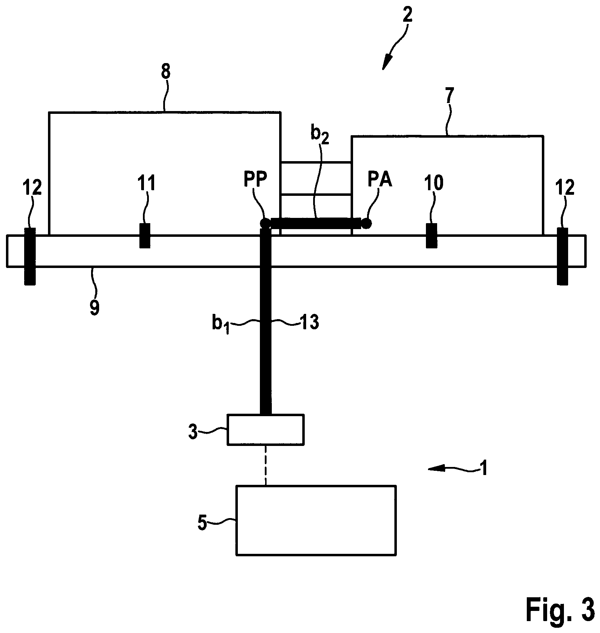

Eine dritte Ausführungsvariante der Erfindung ist in Fig. 3 gezeigt. Wie gezeigt sind der Referenzpunkt PP an der Pumpe 8 und der Referenzpunkt PA an dem Antrieb 7 über ein flexibles zugkraftaufnahmestabiles Lastaufnahmeelement 13 miteinander mechanisch verbunden. Ein freies Ende des Lastaufnahmeelements 13 ist dabei an der ersten Messeinheit 3 zum Erfassen der Positionsveränderung mindestens eines der Referenzpunkte PP, PA angeordnet.

Vorzugsweise ist die Überwachungsvorrichtung zum Bestimmen der Positionsveränderung eingerichtet und ausgebildet, einen Summen-Abstandsänderungswert $\Delta dS$, gebildet als Summenwert aus einer Abstandsänderung b1, zwischen dem mindestens einen Referenzpunkt PP an der Pumpe 8 oder dem mindestens einen Referenzpunktes PA an dem Antrieb 7 und dem mindestens einen ortsfesten Referenzpunkt P1, P2, und einer Abstandsänderung b2 zwischen Pumpe 8 und Antrieb 7, zu bestimmen. Die Auswerteeinheit 5 ist ferner eingerichtet, den Summen- Abstandsänderungswert $\Delta dS$ mit einem vorgegebenen Referenzabstandsänderungswert $\Delta ref$ zu vergleichen und bei Erfüllung der Ungleichung $|\Delta dS| > \Delta ref$ ein Abweichungssignal zu erzeugen und/oder den Summen-Abstandsänderungswert $\Delta dS$ als einen dritten Abweichungswert $\Delta a3$ zu generieren.

Weiter bevorzugt ist die mindestens eine Messeinheit 3, 4 ausgebildet, einen Summen-Abstandwert dS zu bestimmen. Die Auswerteeinheit 5 ist hierzu eingerichtet, den Summen-Abstandsänderungswert $\Delta dS$ aus der Differenz des Summen-Abstandwerts dS und einem vorgegebenen dritten Referenzabstandswert $d_{03}$ zu bilden. Die Auswerteeinheit ist ferner eingerichtet und ausgebildet, den Summen-Abstandwert dS mit dem dritten Referenzabstandswert $d_{03}$ zu vergleichen und bei Erfüllung der Ungleichung $(d_{03} - Aref) > dS > (d_{03} + Aref)$ ein Abweichungssignal zu erzeugen und/oder den Summen-Abstandwert dS als einen dritten Abstandsabweichungswert da3 zu generieren.

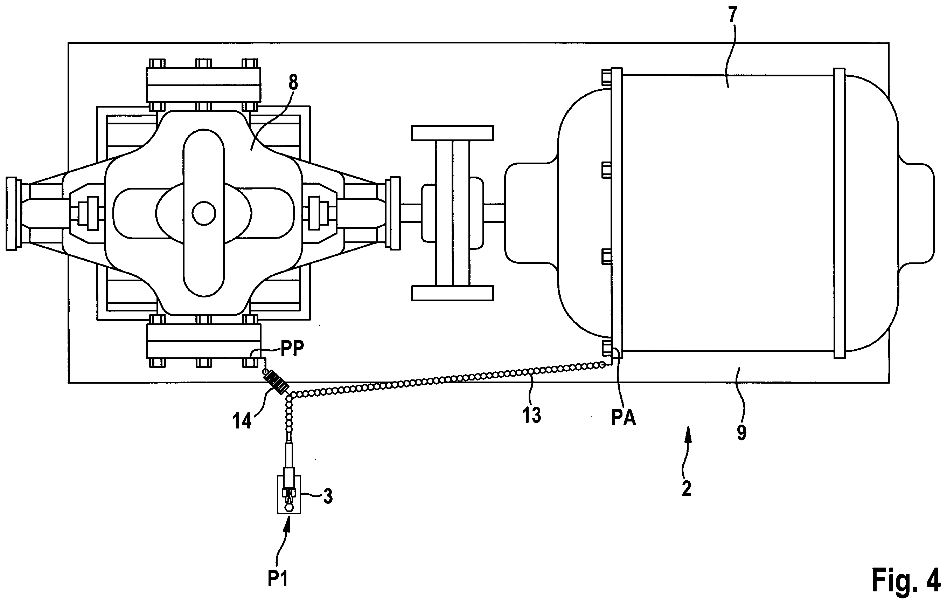

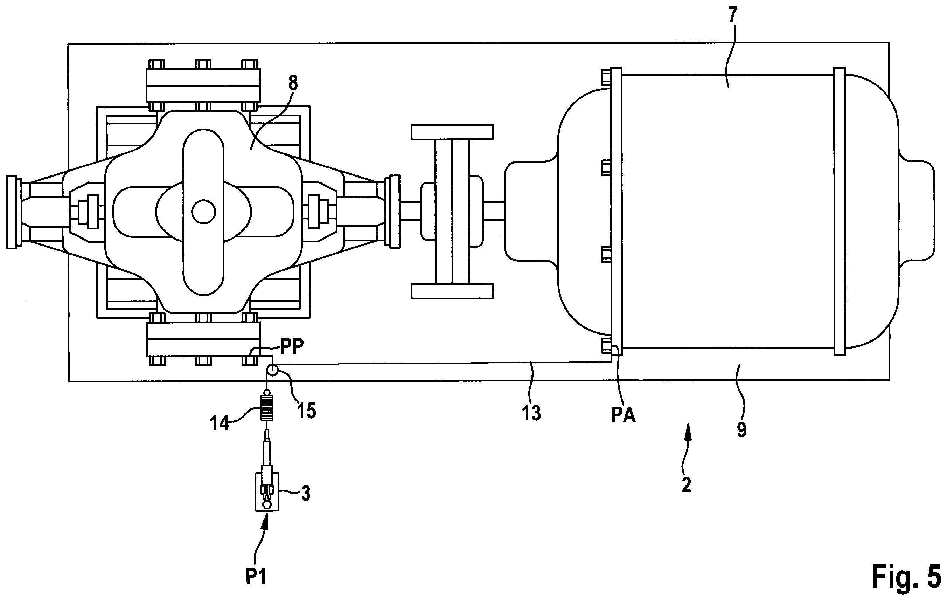

Wie in den Figuren 4 und 5 gezeigt ist das Lastaufnahmeelement 13 vorzugsweise an dem Referenzpunkt PP an der Pumpe 8 oder an dem Referenzpunkt PA an dem Antrieb 7 fixiert angeordnet. Das Lastaufnahmeelement 13 ist hingegen an dem jeweils anderen Referenzpunkt PA, PP, nämlich an dem Referenzpunkt PA an dem Antrieb 7 oder an der Pumpe 8, relativ zu diesem zumindest in einem Freiheitsgrad beweglich angeordnet.

Wie den Figuren 4 und 5 zu entnehmen ist, ist das Lastaufnahmeelement 13 vorzugsweise derart angeordnet, dass dieses zwischen den Referenzpunkten PP, PA an der Pumpe 8 und dem Antrieb 7 in einer ersten Richtung und zwischen einem der Referenzpunkte PA, PP und der ersten Messeinheit 3 in einer zweiten Richtung ausgerichtet ist. Die Richtungsvektoren der ersten und zweiten Richtungen sind weiter bevorzugt linear unabhängig voneinander.

Wie beispielhaft in Figur 4 gezeigt, ist das Lastaufnahmeelement 13 an dem jeweils anderen Referenzpunkt PP mittels eines Federelements 14 angeordnet. Weiter bevorzugt ist - wie in Figur 5 ersichtlich - an dem jeweils anderen Referenzpunkt PP eine Öse 15 oder eine Rolle 15 angeordnet, durch die oder über die das Lastaufnahmeelement 13 geführt angeordnet ist.

Eine bevorzugte Weiterbildung der Erfindung zeichnet sich dadurch aus, dass das Lastaufnahmeelement 13 ketten- oder seilförmig ausgebildet ist. Weiter bevorzugt ist das Lastaufnahmeelement 13 zugelastisch ausgebildet.

Die erste Messeinheit 3 und/oder die zweite Messeinheit 4 umfassen jeweils mindestens einen Abstandssensor. Die Abstandssensoren sind beispielsweise als Wägezellensensor, resistiver Sensor, optischer Sensor, laseroptische Systeme, induktiver Sensor oder Sicherheitsschalter ausgebildet und eingerichtet, den Abstand zwischen den genannten jeweiligen Referenzpunkten PP, PA, P1, P2 durch Bereitstellung eines entsprechenden zum Abstand korrespondieren elektrischen Signals bereitzustellen. Diese Korrespondenz ist vorzugsweise derart eingerichtet, dass das korrespondierende elektrische Signal einer jeweiligen Abstandsgröße zugeordnet ist. Es ist jedoch auch möglich, dass die Korrespondenz durch eine stellvertretende Messgröße gegeben ist, anhand derer qualitativ auf den Abstand und/oder eine Abstandsänderung rückgeschlossen werden kann.

Wie bereits eingangs beschrieben umfasst die Erfindung auch eine Anordnung mit der zuvor beschriebenen Sprinklerpumpeneinheit 2. Die erfindungsgemäß Anordnung umfasst zudem eine - in der Zeichnung nicht näher gezeigte - Steuereinheit, die auch als Steuereinrichtung bezeichnet wird. Die Steuereinrichtung kann eine separate Einrichtung sein oder aber Teil der Auswerteeinheit 5. Auch ist es möglich, dass die Auswerteeinheit 5 Teil der Steuereinheit bzw. Steuereinrichtung ist.

Die Steuereinrichtung ist bevorzugt ausgebildet, zu einem vorgegebenen Teststartzeitpunkt automatisch ein Startsignal zum Start eines Pumpentestlaufes zu erzeugen, um die Pumpe 8, bzw. deren Antrieb 7, zu starten. Weiter ist die Steuereinheit eingerichtet und ausgebildet, bei Vorhandensein des ersten Abweichungswerts $\Delta a1$ und/oder des zweiten Abweichungswerts $\Delta a2$ das Startsignal zum Start des Pumpentestlaufes zu blockieren.

Weiter bevorzugt ist die Steuereinheit eingerichtet und ausgebildet ist, bei Vorhandensein des ersten Abstandsabweichungswerts da1 und/oder des zweiten Abstandsabweichungswert da2 das Startsignal zum Start des Pumpentestlaufes zu blockieren.

Vorzugsweise ist die Steuereinheit ausgebildet, das Startsignal zum Start des Pumpentestlaufes so lange zu blockieren, bis die Steuereinheit mittels eines Resetsignals zurückgesetzt wird. Auf diese Weise wird die Funktion des Pumpentestlaufes temporär zumindest so lange verhindert, bis die Steuereinheit mittels des Resetsignals zurückgesetzt wird.

Die Erfindung umfasst auch das eingangs genannte Verfahren, das sich durch Bestimmen einer Positionsveränderung mindestens eines Referenzpunktes PP, PA an der Pumpe 8 und/oder dem Antrieb 7 relativ zu mindestens einem ortsfesten Referenzpunkt P1, P2 mittels der mindestens einen Messeinheit 3, 4 auszeichnet.

Zu den weiteren Ausführungsvarianten des erfindungsgemäßen Verfahrens wird - zur Vermeidung von Wiederholungen - auf unsere obigen Ausführungen zur erfindungsgemäßen Überwachungsvorrichtung 1 verwiesen. Sämtliche Angaben zur Überwachungsvorrichtung 1 gelten in analoger Weise auch für das erfindungsgemäße Verfahren.

Besonders bevorzugt sind beim Einsatz von Wägezellen als erste und zweite Messeinheiten 3, 4 die jeweiligen Verbindungen mit den Referenzpunkten PP, PA federvorgespannt ausgeführt. Auch ist es möglich, dass diese Verbindungen Stellelemente umfassen, mittels derer diese mit einer Federvorspannung einstellbar beaufschlagt werden. Ein solches Vorspannen dient einerseits der Kompensation möglicher Temperaturdrift durch Längung oder Verkürzung der jeweiligen Verbindungsmittel zwischen der jeweiligen Messeinheit 3, 4 und den genannten Referenzpunkten PP, PA. Ein weiterer Vorteil besteht darin, dass durch die Vorspannung die Wägezelle stets mit einer Vorspannungskraft beaufschlagt ist, sodass mit diesen sowohl eine Abstandsvergrößerung als auch eine Abstandverkleinerung zuverlässig erkannt und überwacht werden können. Insbesondere ist es so auch möglich, ein Abweichen von der Ruhelage bzw. Nulllage, also eine auftretende Abstandsänderung qualitativ zu erfassen, ohne die Größe dieser Abstandsänderung quantitativ zu beziffern.

**Patentansprüche**

1. Überwachungsvorrichtung (1) für eine Sprinklerpumpeneinheit (2) umfassend

   - mindestens eine erste Messeinheit (3) und
   - eine Auswerteeinheit (5) und
   - wobei die Sprinklerpumpeneinheit (2) einen Antrieb (7), eine Pumpe (8) und eine Montagebasis (9) umfasst, wobei der Antrieb (7) mit einer ersten Befestigung (10) und die Pumpe (8) mit einer zweiten Befestigung (11) an der Montagebasis (9) befestigt sind und die Montagebasis (9) mit einer dritten Befestigung (12) am Boden befestigt ist,
   **dadurch gekennzeichnet, dass**
   - die Überwachungsvorrichtung (1) eingerichtet und ausgebildet ist, eine Positionsveränderung mindestens eines Referenzpunktes (PP, PA) an der Pumpe (8) und/oder dem Antrieb (7) relativ zu mindestens einem ortsfesten Referenzpunkt mittels der mindestens einen ersten Messeinheit (3) zu bestimmen.

2. Überwachungsvorrichtung (1) nach Anspruch 1, **dadurch gekennzeichnet, dass** die Überwachungsvorrichtung zum Bestimmen der Positionsveränderung eingerichtet und ausgebildet ist, einen ersten Abstandsänderungswert $\Delta d1$ des mindestens einen Referenzpunktes (PP) an der Pumpe (8) und/oder einen zweiten Abstandsänderungswert $\Delta d2$ des mindestens einen Referenzpunktes (PA) an dem Antrieb (7) zu dem mindestens einen ortsfesten Referenzpunkt zu bestimmen, wobei die Auswerteeinheit (5) ferner eingerichtet und ausgebildet ist, den ersten Abstandsänderungswert $\Delta d1$ und/oder den zweiten Abstandsänderungswert $\Delta d2$ mit einem vorgegebenen Referenzabstandsänderungswert $\Delta ref$ zu vergleichen und bei Erfüllung der Ungleichungen

$$|\Delta d1| > \Delta ref \text{ und/oder } |\Delta d2| > \Delta ref$$

den ersten Abstandsänderungswert $\Delta d1$ als einen ersten Abweichungswert $\Delta a1$ und/oder den zweiten Abstandsänderungswert $\Delta d2$ als einen zweiten Abweichungswert $\Delta a2$ zu generieren und/oder ein Abweichungssignal ($S_{A1}$) zu generieren.

3. Überwachungsvorrichtung nach Anspruch 2, **dadurch gekennzeichnet, dass** die Überwachungsvorrichtung eingerichtet ist, den ersten Abstandsänderungswert $\Delta d1$ des Referenzpunktes (PP) an der Pumpe (8) zu einem ortsfesten ersten Referenzpunkt und/oder den zweiten Abstandsänderungswert $\Delta d2$ des Referenzpunktes (PA) an dem Antrieb (7) zu einem ortsfesten zweiten Referenzpunkt zu bestimmen.

4. Überwachungsvorrichtung (1) einem der Ansprüche 2 oder 3, wobei die mindestens eine erste Messeinheit (3) eingerichtet und ausgebildet ist, einen ersten Abstandwert d1 zu bestimmen und eine zweite Messeinheit (4) eingerichtet und ausgebildet ist, einen zweiten Abstandwert d2 zu bestimmen, und ferner die Auswerteeinheit (5) eingerichtet und ausgebildet ist, den ersten Abstandsänderungswert $\Delta d1$ aus der Differenz des Abstandwertes d1 und einem vorgegebenen ersten Referenzabstandswert $d_{01}$ zu bilden sowie den zweiten Abstandsänderungswert $\Delta d2$ aus der Differenz des Abstandwertes d2 und einem vorgegebenen zweiten Referenzabstandswert $d_{02}$, wobei die Auswerteeinheit (5) ferner eingerichtet und ausgebildet, ist den ersten Abstandswert d1 mit dem ersten Referenzabstandwert $d_{01}$ sowie den zweiten Abstandswert d2 mit dem zweiten Referenzabstandwert $d_{02}$ zu vergleichen und bei Erfüllung der Ungleichungen

$$(d_{01} + \Delta ref) < d1 < (d_{01} - \Delta ref)$$

und

$$(d_{02} + \Delta ref) < d2 < (d_{02} - \Delta ref)$$

den ersten Abstandwert d1 als einen ersten Abstandsabweichungswert da1 und/oder den zweiten Abstandswert d2 als einen zweiten Abstandsabweichungswert da2 zu generieren und/oder ein Abweichungssignal $(S_{A1})$ zu generieren, wobei $\Delta$ref ein vorgegebener Referenzabstandsänderungswert ist.

5. Überwachungsvorrichtung (1) nach Anspruch 1, **dadurch gekennzeichnet, dass** der Referenzpunkt (PP) an der Pumpe (8) und der Referenzpunkt (PA) an dem Antrieb (7) über ein flexibles zugkraftaufnahmestabiles Lastaufnahmeelement (13) miteinander mechanisch verbunden sind, wobei ein freies Ende des Lastaufnahmeelements (13) an der ersten Messeinheit (3) zum Erfassen der Positionsveränderung mindestens eines der Referenzpunkte (PP, PA) angeordnet ist.

6. Überwachungsvorrichtung (1) nach Anspruch 5, **dadurch gekennzeichnet, dass** die Überwachungsvorrichtung (1) zum Bestimmen der Positionsveränderung eingerichtet und ausgebildet ist, einen Summen-Abstandsänderungswert $\Delta$dS, gebildet als Summenwert aus einer Abstandsänderung b1, zwischen dem mindestens einen Referenzpunkt (PP) an der Pumpe (8) oder dem mindestens einen Referenzpunktes (PA) an dem Antrieb (7) und dem mindestens einen ortsfesten Referenzpunkt, und einer Abstandsänderung b2 zwischen Pumpe und Antrieb, zu bestimmen, wobei die Auswerteeinheit (5) ferner eingerichtet und ausgebildet ist, den Summen- Abstandsänderungswert $\Delta$dS mit einem vorgegebenen Referenzabstandsänderungswert $\Delta$ref zu vergleichen und bei Erfüllung der Ungleichung | $\Delta$dS| > $\Delta$ref ein Abweichungssignal $(S_{A3})$ zu erzeugen und/oder den Summen-Abstandsänderungswert $\Delta$dS als einen dritten Abweichungswert $\Delta$a3 zu generieren.

7. Überwachungsvorrichtung (1) nach Anspruch 6, wobei die mindestens eine Messeinheit (3) eingerichtet und ausgebildet ist, einen Summen-Abstandwert dS zu bestimmen, und ferner die Auswerteeinheit (5) eingerichtet und ausgebildet ist, den Summen-Abstandsänderungswert $\Delta$dS aus der Differenz des Summen-Abstandwerts dS und einem vorgegebenen dritten Referenzabstandswert $d_{03}$ zu bilden, wobei vorzugsweise die Auswerteeinheit (5) ferner eingerichtet und ausgebildet, ist den Summen-Abstandwert dS mit dem dritten Referenzabstandswert $d_{03}$ zu vergleichen und bei Erfüllung der Ungleichung

$$(d_{03} - \Delta ref) > dS > (d_{03} + \Delta ref)$$

ein Abweichungssignal $(S_{A1})$ zu erzeugen und/oder den Summen-Abstandwert dS als einen dritten Abstandsabweichungswert da3 zu generieren.

8. Überwachungsvorrichtung (1) nach einem der Ansprüche 5 bis 7, **dadurch gekennzeichnet, dass** das Lastaufnahmeelement (13) an dem Referenzpunkt an der Pumpe (8) oder an dem Referenzpunkt an dem Antrieb (7) fixiert angeordnet ist, während das Lastaufnahmeelement (13) an dem jeweils anderen Referenzpunkt, nämlich an dem Referenzpunkt an dem Antrieb (7) oder an der Pumpe (8), relativ zu diesem zumindest in einem Freiheitsgrad beweglich angeordnet ist.

9. Überwachungsvorrichtung (1) nach Anspruch 8, **dadurch gekennzeichnet, dass** das Lastaufnahmeelement (13) derart angeordnet ist, dass dieses zwischen den Referenzpunkten an der Pumpe (8) und dem Antrieb (7) in einer ersten Richtung und zwischen einem der Referenzpunkte und der ersten Messeinheit (3) in einer zweiten Richtung ausgerichtet ist, wobei die Richtungsvektoren der ersten und zweiten Richtungen linear unabhängig voneinander sind.

10. Überwachungsvorrichtung (1) nach einem der Ansprüche 8 oder 9, **dadurch gekennzeichnet, dass** das Lastaufnahmeelement (13) an dem jeweils anderen Referenzpunkt mittels eines Federelements (14) angeordnet ist.

11. Überwachungsvorrichtung (1) nach einem der Ansprüche 9 oder 10, **dadurch gekennzeichnet, dass** an dem jeweils anderen Referenzpunkt eine Öse oder eine Rolle angeordnet ist, durch die oder über die das Lastaufnahmeelement (13) geführt angeordnet ist.

12. Überwachungsvorrichtung (1) nach einem der Ansprüche 5 bis 11, **dadurch gekennzeichnet, dass** das Lastaufnahmeelement (13) ketten- oder seilförmig ausgebildet ist.

13. Überwachungsvorrichtung (1) nach einem der Ansprüche 5 bis 12, **dadurch gekennzeichnet, dass** das Lastaufnahmeelement (13) zugelastisch ausgebildet ist.

14. Überwachungsvorrichtung (1) nach einem der Ansprüche 1 bis 13, wobei die erste Messeinheit (3) und/oder die zweite Messeinheit (4) mindestens einen Abstandssensor aus der folgenden Liste umfassen: Wägezellensensor, resistiver Sensor, optischer Sensor, laseroptische Systeme, induktiver Sensor, Sicherheitsschalter.

15. Anordnung mit einer Sprinklerpumpeneinheit (2), wobei die Sprinklerpumpeneinheit (2) einen Antrieb (7), eine Pumpe (8) und eine Montagebasis (9) umfasst, wobei der Antrieb (7) mit einer ersten Befestigung (10) und die Pumpe (8) mit einer zweiten Befestigung (11) an der Montagebasis (9) befestigt sind und die Montagebasis (9) mit einer dritten Befestigung (12) am Boden befestigt ist, und mit einer Überwachungseinrichtung (1) nach einem der Ansprüche 1 bis 14 und ferner mit einer Steuereinrichtung (6), wobei die Steuereinrichtung (6) ferner eingerichtet und ausgebildet ist, zu einem vorgegebenen Teststartzeitpunkt ($t_{test}$) automatisch ein Startsignal ($S_{test}$) zum Start eines Pumpentestlaufes zu erzeugen, um die Pumpe (8) zu starten und die Steuereinrichtung (6) eingerichtet und ausgebildet ist, bei Vorhandensein eines ersten Abweichungswerts ($\Delta$a1) und/oder eines zweiten Abweichungswerts ($\Delta$a2) das Startsignal ($S_{test}$) zum Start des Pumpentestlaufes zu blockieren.

16. Anordnung nach Anspruch 15, **dadurch gekennzeichnet, dass** die Steuereinrichtung (6) eingerichtet und ausgebildet ist, bei Vorhandensein eines ersten Abstandsabweichungswerts (da1) und/oder eines zweiten Abstandsabweichungswert (da2) das Startsignal ($S_{test}$) zum Start des Pumpentestlaufes zu blockieren.

17. Anordnung nach einem der Ansprüche 15 oder 16, **dadurch gekennzeichnet, dass** die Steuereinheit (6) ausgebildet ist, das Startsignal ($S_{test}$) zum Start des Pumpentestlaufes so lange zu blockieren, bis die Steuereinheit (6) mittels eines Resetsignals zurückgesetzt wird.

18. Verfahren zur Überwachung einer Sprinklerpumpeneinheit (2) mit einer Überwachungsvorrichtung (1), wobei die Überwachungsvorrichtung (1) mindestens eine erste Messeinheit (3) und eine Auswerteeinheit (5) umfasst,

> wobei die Sprinklerpumpeneinheit (2) einen Antrieb (7), eine Pumpe (8) und eine Montagebasis (9) umfasst, wobei der Antrieb (7) mit einer ersten Befestigung (10) und die Pumpe (8) mit einer zweiten Befestigung (11) an der Montagebasis (9) befestigt sind und die Montagebasis (9) mit einer dritten Befestigung (12) am Boden befestigt ist,
> **gekennzeichnet durch**
> Bestimmen einer Positionsveränderung mindestens eines Referenzpunktes (PP, PA) an der Pumpe (8) und/oder dem Antrieb (7) relativ zu mindestens einem ortsfesten Referenzpunkt mittels der mindestens einen Messeinheit (3).

19. Verfahren nach Anspruch 18 **gekennzeichnet durch** Bestimmen der Positionsveränderung durch Bestimmen eines ersten Abstandsänderungswerts $\Delta$d1 des mindestens einen Referenzpunktes (PP) an der Pumpe (8) und/oder eines zweiten Abstandsänderungswerts $\Delta$d2 des mindestens einen Referenzpunktes (PA) an dem Antrieb (7) zu dem mindestens einen ortsfesten Referenzpunkt und Vergleichen des ersten Abstandsänderungswertes $\Delta$d1 und/oder des zweiten Abstandsänderungswertes $\Delta$d2 mit einem vorgegebenen Referenzabstandsänderungswert $\Delta$ref und bei Erfüllung der Ungleichungen

$$|\Delta d1| > \Delta ref \text{ und/oder } |\Delta d2| > \Delta ref$$

den ersten Abstandsänderungswert $\Delta$d1 als einen ersten Abweichungswert $\Delta$a1 und/oder den zweiten Abstandsänderungswert $\Delta$d2 als einen zweiten Abweichungswert $\Delta$a2 zu generieren und/oder ein Abweichungssignal ($S_{A1}$) zu generieren.

20. Verfahren nach Anspruch 19 **gekennzeichnet durch** Bestimmen des ersten Abstandsänderungswertes $\Delta$d1 des Referenzpunktes (PP) an der Pumpe (8) zu einem ortsfesten ersten Referenzpunkt (PA1) und/oder des zweiten Abstandsänderungswertes $\Delta$d2 des Referenzpunktes (PA) an dem Antrieb (7) zu einem ortsfesten zweiten Referenzpunkt.

21. Verfahren nach einem der Ansprüche 19 oder 20 **gekennzeichnet durch** Bestimmen eines ersten Abstandwertes d1 mittels der mindestens einen ersten Messeinheit (3) und eines zweiten Abstandwert d2 mittels mindestens einer zweiten Messeinheit (4), und ferner durch Bilden des ersten Abstandsänderungswerts $\Delta$d1 aus der Differenz des Abstandwertes d1 und einem vorgegebenen ersten Referenzabstandswert $d_{01}$ sowie des zweiten Abstandsänderungswerts $\Delta$d2 aus der Differenz des Abstandwertes d2 und einem vorgegebenen zweiten Referenzabstandswert $d_{02}$ und Vergleichen des ersten Abstandswerts d1 mit dem ersten Referenzabstandwert $d_{01}$ sowie des zweiten Abstandswerts d2 mit dem zweiten Referenzabstandwert $d_{02}$ und bei Erfüllung der Ungleichungen

$$(d_{01} + \Delta ref) < d1 < (d_{01} - \Delta ref)$$

und

$$(d_{02} + \Delta ref) < d2 < (d_{02} - \Delta ref)$$

den ersten Abstandwert d1 als einen ersten Abstandsabweichungswert da1 und/oder den zweiten Abstandswert d2 als einen zweiten Abstandsabweichungswert da2 zu generieren und/oder ein Abweichungssignal ($S_{A1}$) zu generieren, wobei $\Delta$ref ein vorgegebener Referenzabstandsänderungswert ist.

22. Verfahren nach Anspruch 18 **gekennzeichnet durch** Erfassen der Positionsveränderung mindestens eines der Referenzpunkte (PP, PA), indem ein freies Ende des Lastaufnahmeelements (13) an der ersten Messeinheit (3) angeordnet ist und der Referenzpunkt (PP) an der Pumpe (8) und der Referenzpunkt (PA) an dem Antrieb (7) über ein flexibles zugkraftaufnahmestabiles Lastaufnahmeelement (13) miteinander mechanisch verbunden sind.

23. Verfahren nach Anspruch 22 **gekennzeichnet durch** Bestimmen der Positionsveränderung durch Bilden eines Summen-Abstandsänderungswert $\Delta dS$, gebildet als Summenwert aus einer Abstandsänderung b1 zwischen dem mindestens einen Referenzpunkt (PP) an der Pumpe (8) oder dem mindestens einen Referenzpunktes (PA) an dem Antrieb (7) und dem mindestens einen ortsfesten Referenzpunkt und einer Abstandsänderung b2 zwischen Pumpe und Antrieb und Vergleichen des Summen-Abstandsänderungswert $\Delta dS$ mit einem vorgegebenen Referenzabstandsänderungswert $\Delta ref$ und bei Erfüllung der Ungleichung $|\Delta dS| > \Delta ref$ Erzeugen eines Abweichungssignales ($S_{A3}$) und/oder Generieren des Summen-Abstandsänderungswertes $\Delta dS$ als einen dritten Abweichungswert $\Delta a3$.

24. Verfahren nach Anspruch 23 **gekennzeichnet durch** Bilden eines Summen-Abstandwertes dS und Bilden des Summen-Abstandsänderungswerts $\Delta dS$ aus der Differenz des Summen-Abstandwerts dS und einem vorgegebenen dritten Referenzabstandswert (dos), Vergleichen des Summen-Abstandwert dS mit dem dritten Referenzabstandwert (dos) und bei Erfüllung der Ungleichung

$$(d_{03} - \Delta ref) > dS > (d_{03} + \Delta ref)$$

Erzeugen eines Abweichungssignals ($S_{A1}$) und/oder Generieren des Summen-Abstandwert dS als einen dritten Abstandsabweichungswert da3.

25. Verfahren nach einem der Ansprüche 22 bis 24, **dadurch gekennzeichnet, dass** das Lastaufnahmeelement (13) an dem Referenzpunkt an der Pumpe (8) oder an dem Referenzpunkt an dem Antrieb (7) fixiert angeordnet ist, während das Lastaufnahmeelement (13) an dem jeweils anderen Referenzpunkt, nämlich an dem Referenzpunkt an dem Antrieb (7) oder an der Pumpe (8), relativ zu diesem zumindest in einem Freiheitsgrad beweglich angeordnet ist.

26. Verfahren nach Anspruch 25, **dadurch gekennzeichnet, dass** das Lastaufnahmeelement (13) derart angeordnet ist, dass dieses zwischen den Referenzpunkten an der Pumpe (8) und dem Antrieb (7) in einer ersten Richtung und zwischen einem der Referenzpunkte und der ersten Messeinheit (3) in einer zweiten Richtung ausgerichtet ist, wobei die Richtungsvektoren der ersten und zweiten Richtungen linear unabhängig voneinander sind.

27. Verfahren zum Betreiben einer Sprinklerpumpeneinheit (2), wobei die Sprinklerpumpeneinheit (2) einen Antrieb (7), eine Pumpe (8) und eine Montagebasis (9) umfasst, wobei der Antrieb (7) mit einer ersten Befestigung (10) und die Pumpe (8) mit einer zweiten Befestigung (11) an der Montagebasis (9) befestigt sind und die Montagebasis (9) mit einer dritten Befestigung (12) am Boden befestigt ist, und mit einer Überwachungseinrichtung (1) nach einem der Ansprüche 1 bis 14 und ferner mit einer Steuereinrichtung (6), wobei die Steuereinrichtung (6) zu einem vorgegebenen Teststartzeitpunkt ($t_{test}$) automatisch ein Startsignal ($S_{test}$) zum Start eines Pumpentestlaufes erzeugt, um die Pumpe (8) zu starten, und bei Vorhandensein eines ersten Abweichungswerts ($\Delta a1$) und/oder eines zweiten Abweichungswerts ($\Delta a2$) das Startsignal ($S_{test}$) zum Start des Pumpentestlaufes mittels der Steuereinrichtung (6) blockiert.

Fig. 1

Fig. 2

**Fig. 3**

Fig. 4

Fig. 5

Fig. 6

Europäisches Patentamt
European Patent Office
Office européen des brevets

# EUROPÄISCHER RECHERCHENBERICHT

Nummer der Anmeldung

EP 24 22 1035

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 112 502 992 A (DONGMING CITIC GUOAN RUIHUA NEW MAT CO LTD) 16. März 2021 (2021-03-16) | 1-4,14, 18-21 | INV. F04D15/00 F04D13/06 |
| Y | * Abbildungen 1-3, 11, 12 * | 15-17,27 | F04D29/043 |
| A | | 5-13, 22-26 | F04D29/60 F04D29/62 |
| | ----- | | |
| X | US 2021/003394 A1 (STRUNK FRED L [US] ET AL) 7. Januar 2021 (2021-01-07) | 1-4,14, 18-21 | |
| Y | * Absatz [0023] - Absatz [0038] * | 15-17,27 | |
| A | * Absatz [0062] * * Abbildungen 1-3, 9 * | 5-13, 22-26 | |
| | ----- | | |
| Y | US 2012/209408 A1 (VIETSCH JAN WILLEM KARL [NL]) 16. August 2012 (2012-08-16) * Absatz [0077] * | 15-17,27 | |
| | ----- | | |
| A | US 6 347 462 B1 (STEINICH KLAUS-MANFRED [DE]) 19. Februar 2002 (2002-02-19) * Spalte 5, Zeile 26 - Zeile 44 * * Abbildung 1a * | 1-27 | |
| | ----- | | |

RECHERCHIERTE SACHGEBIETE (IPC)

F04D
G01B
A62C

Der vorliegende Recherchenbericht wurde für alle Patentansprüche erstellt

| Recherchenort | Abschlußdatum der Recherche | Prüfer |
|---|---|---|
| Den Haag | 16. April 2025 | Oliveira, Damien |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 24 22 1035

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-04-2025

| Im Recherchenbericht angeführtes Patentdokument | Datum der Veröffentlichung | Mitglied(er) der Patentfamilie | Datum der Veröffentlichung |
|---|---|---|---|
| CN 112502992 A | 16-03-2021 | KEINE | |
| US 2021003394 A1 | 07-01-2021 | US 2021003394 A1 | 07-01-2021 |
| | | WO 2022005525 A1 | 06-01-2022 |
| US 2012209408 A1 | 16-08-2012 | EP 2656035 A1 | 30-10-2013 |
| | | EP 2656038 A1 | 30-10-2013 |
| | | EP 2656040 A1 | 30-10-2013 |
| | | EP 3690422 A1 | 05-08-2020 |
| | | US 2012209408 A1 | 16-08-2012 |
| | | US 2014028298 A1 | 30-01-2014 |
| | | US 2014214182 A1 | 31-07-2014 |
| | | WO 2012085190 A1 | 28-06-2012 |
| | | WO 2012085213 A1 | 28-06-2012 |
| | | WO 2012085231 A1 | 28-06-2012 |
| US 6347462 B1 | 19-02-2002 | DE 19839027 C1 | 10-02-2000 |
| | | EP 0982562 A2 | 01-03-2000 |
| | | ES 2207081 T3 | 16-05-2004 |
| | | US 6347462 B1 | 19-02-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03089875 A1